# EUROPÄISCHE PATENTSCHRIFT

(11) **EP 0 491 894 B1**
(45) Veröffentlichungstag und Bekanntmachung des Hinweises auf die Patenterteilung: **07.02.1996**
(21) Anmeldenummer: 91911681.4
(22) Anmeldetag: 16.07.1991
(51) Int. Cl.: B23Q 5/10, H02K 16/02

(54) **HAUPTSPINDELANTRIEB FÜR EINE WERKZEUGMASCHINE**
MAIN-SPINDLE DRIVE FOR A MACHINE TOOLE
ENTRAINEMENT DE LA BROCHE PRINCIPALE D'UNE MACHINE-OUTIL

(30) Priorität: 16.07.1990 CH 2367/90
(43) Veröffentlichungstag der Anmeldung: 01.07.1992
(73) Patentinhaber: GAFNER, Rudolf, CH-5054 Kirchleerau (CH)
(72) Erfinder: GAFNER, Rudolf, CH-4658 Däniken (CH)
(74) Vertreter: Feldmann, Clarence Paul
(86) Internationale Anmeldenummer: CH9100150
(87) Internationale Veröffentlichungsnummer: WO9201532

(56) Entgegenhaltungen:
- FR-A- 972 825
- FR-A- 1 062 175
- FR-E- 62 367
- SU-A- 174 048

## Beschreibung

Die vorliegende Erfindung betrifft einen Hauptspindelantrieb für eine Werkzeugmaschine mit mehreren einstellbaren Drehzahlen mit mindestens zwei gleichachsig hintereinander angeordneten Elektromotoren, wobei der Stator nur eines einzigen, an einem Ende der Reihe der Elektromotoren liegenden Elektromotors ortsfest befestigt ist und die Statoren der übrigen Elektromotoren drehbar gelagert sind, wobei der Rotor des einen Elektromotores mit dem drehbar gelagerten Stator des nächstfolgenden Elektromotores mechanisch starr gekuppelt ist, wobei einer der Elektromotoren eine koaxiale Welle mit einer Anschlussstelle für einen Werkzeughalter aufweist.

Ein derartiger Antrieb ist aus der SU-A-174 048 bekannt.

Nach SU-A-174048 (VRAGOV) weist ein ortsfester Elektromotor einen seitlichen Abgriff am Rotor auf. Dieser Rotor ist fest gekuppelt mit dem Stator eines zweiten Elektromotors. Der Rotor des ersten Elektromotors ist mit einem seitlichen Abgriff für ein Uebersetzungsgetriebe versehen. Der zweite Elektromotor hat einen konzentrischen Abgriff für einen Werkzeughalter oder dergleichen an seiner Rotorwelle. Daher sind immer zwei verschiedene Abgriffmöglichkeiten gleichtzeitig vorhanden. Beide Elektromotoren sind elektrisch voneinander abhängig und die Drehzahlen stehen in einem festen Verhältnis zueinander.

Aus der DE-A1 3436565 ist ein Hauptspindelantrieb für Werkzeugmaschinen bekannt. Bei diesem Hauptspindelantrieb ist ausser einem Antriebsmotor mit konstanter Drehzahl auch noch ein Hauptspindelgetriebe vorgesehen, um die Drehzahl der Haupspindel verändern und einstellen zu können. Das Hauptspindelgetriebe setzt sich aus einem Planetengetriebe, das als Planetenraddifferenzialgetriebe oder Ueberlagerungsgetriebe gefahren wird, aus einem Mehrgang-Schaltgetriebe, aus einem Kegelradgetriebe zur Ankopplung des Antriebsmotors und aus einem Vorgelege zusammen. Dieses Hauptspindelgetriebe ist kompliziert und mit entsprechend hohen Kosten verbunden. Die erreichbaren Spindelumdrehungen pro Minute liegen um 9000, was relativ bescheiden ist und bei einer allgemein verwendbaren Werkzeugmaschinenicht nicht zur Lösung aller Aufgaben ausreicht. Dieses Hauptspindelgetriebe kann deshalb nicht in einer Werkzeugmaschine mit universellen Bearbeitungsmöglichkeiten verwendet werden.

Aufgabe der vorliegenden Erfindung ist es, einen Hauptspindelantrieb der eingangs erwähnten Art zu schaffen, der einfach und kostengünstig ist und sowohl für grosse Werkzeuge mit relativ bescheidener Umdrehungszahl als auch für kleinere Werkzeuge mit einer verhältnismässig hohen Umdrehungszahl in universellen Bearbeitungsmaschinen geeignet ist und der trotz diesen hohen Drahzahlen mit einfachen, für niedrigeren Drehzahlen hergestellten Lagern ausgerüstet werden kann.

Die gestellte Aufgabe ist dadurch gelöst, dass der Stator (1) des am vorderen Ende der Reihe der Elektromotoren liegenden Elektromotors ortsfest befestigt ist, und dass der Rotor jedes Elektromotores an einer von mehreren koaxialen Wellen derart angeschlossen ist, dass der am vorderen Ende der Reihe der Elektromotoren liegende Rotor an der äussersten rohrförmigen Welle und die der Reihe nach nachfolgenden Rotoren an einer der Reihe nach weiter innen liegenden koaxialen Welle angeschlossen sind, wobei alle koaxialen Wellen am vorderen Ende der Reihe von Elektromotoren herausgeführt sind und an ihren Enden für die Aufnahme eines Werkzeughalters bestimmte mechanische Anschlussstellen aufweisen.

Dieser Hauptspindelantrieb ist mit mehreren Elektromotoren aber dafür ohne ein kompliziertes Hauptspindelgetriebe aufgebaut. Um die höchsten Drehzahlen eines am Hauptspindelantrieb angeschlossenenen Werkzeuges zu erreichen, drehen sich alle Elektromotoren in der gleichen Drehrichtung und der Werkzeughalter ist mit dem Rotor des letzten, vom vorderen Ende der Reihe der Elektromotoren entferntesten Elektromotors mechanisch gekuppelt. In dieser Betriebsstellung zählt die Summe der Drehzahlen der einzelnen Elektromotoren. Mit dieser Hauptspindelantrieb können Drehzahlen bis zu 50000 Umdrehungen in der Minute erreicht werden. Lagerprobleme ergeben sich dabei nicht, weil die einzelnen, zwischen den koaxial geführten Wellen liegenden Lager und auch die Lager des ersten den ortsfesten Stator aufnehmenden Elektromotors sich jeweils nur mit der Drehzahl eines einzigen Elektromotors drehen. Nachdem der Rotor jedes Elektromotors eine für die Aufnahme eines Werkzeughalters bestimmte, mechanische Anschlussteile aufweist, können auch Zwischendrehzahlen für den Werkzeughalter abgegriffen werden. Trotz der vielseitigen Anwendbarkeit ist dieser Hauptspindelantrieb einfach und kostengünstig.

Aus der FR-A 573884 ist zwar ein Antrieb mit mehreren einstellbare- Drehzahlen, mit zwei gleichachsig hintereinander angeordneten Elektromotoren bekannt. Der Rotor des einen Elektromotors ist mit dem drehbar gelagerten Stator des anderen Elektromotors mechanisch starr gekuppelt. Bei dieser bekannten Anordnung werden die beiden mit je einem Rotor verbundenen Wellen an beiden Seiten der Antriebseinheit herausgeführt. Das zwischen einer ortsfesten Abstützung und der Welle des den drehbar gelagerten Stator aufweisenden Elektromotors liegende Lager muss für die höchste Drehzahl der Antriebseinheit bemessen sein, was bei hohen Drehzahlen Schwierigkeiten verursachen kann und ein besonders ausgebildetes Lager bedarf.

Nach FR-A-972 825 (DESMOULIN) ist ferner eine ganze Reihe von Elektromotoren dargestellt, wobei jeweils ein Stator mit dem Rotor des nächsten fest verbunden ist. Es gibt eine einzige Abgriffwelle. Diese kann einseitig oder beidseitig aus der Kaskade von Elektromotoren herausgeführt sein. Es steht daher ein Abgriff mit einer in grossem Bereich wählbaren Enddrehzahl zur Verfügung.

Mindestens ein Elektromotor kann in zwei Drehrichtungen betreibbar sein. Bei entgegengesetzter Drehrichtung der hintereinander angeordneten Elektromotoren dreht sich der Rotor des letzten, vom vorderen Ende der Reihe der Elektromotoren entferntesten Elektromotors in Bezug auf einen ortsfesten Bezugspunkt mit einer der Differenz der Drehzahlen der einzelnen Elektromotoren entsprechenden Drehzahl.

Die Elektromotoren weisen vorteilhafterweise unterschiedliche maximale Drehzahlen auf. So können nach Bedarf Elektromotoren mit den gewünschten maximalen Drehzahlen eingesetzt werden. Die Differenz der Drehzahlen kann bei langsamlaufenden Werkzeugen ausgenützt werden.

Mindestens ein Elektromotor kann eine kontinuierlich veränderbare Drehzahl aufweisen. Durch diese Massnahme sind für den Werkzeughalter praktisch alle gewünschten Drehzahlen einstellbar.

Der Stator und der Rotor mindestens eines der Elektromotoren können miteinander mechanisch kuppelbar sein. Durch diese Massnahme ist es möglich den nicht benötigten und elektrisch nicht gespeisten Elektromotor mechanisch kurzzuschliessen. Der Stator und der Rotor drehen dabei passiv mit. Die mechanische Kupplung zwischen einem Stator und einem in mindestens einer Betriebsstellung mit ihm gekuppelt drehenden Rotor erfolgt dabei vorteilhafterweise durch den Werkzeughalter. Der Werkzeughalter hat entsprechend ausgebildete Anschlüsse, die mit mindestens zwei Wellen in Eingriff stehen und so mindestens einen Elektromotor mechanisch kurzschliessen. Der Werkzeughalter kann bei dieser Lösung an der innersten Welle ankuppelbar sein.

Im folgenden werden anhand der beiliegenden Zeichnungen Ausführungsbeispiele der Erfindung näher beschrieben. Es zeigen:
- Fig.1: die schematische Darstellung eines Hauptspinelantriebes mit zwei Elektromotoren
- Fig.2: den in Fig.1 gezeigten Hauptspinelantrieb mit mechanisch kurzgeschlosse nem rechtem Elektromotor,
- Fig.3: den in Fig.1 gezeigten Hauptspindelantrieb mit mechanisch kurzgeschlossenem linken Elektromotor,
- Fig.4: einen Teil des dem Werkzeughalter zugekehrten Endbereiches eines Hauptspindelantriebes in der in Fig.1 dargestellten Stellung,
- Fig.5: in der in Fig.2 dargestellten Stellung und
- Fig.6: in der in Fig.3 dargestellten Stellung.

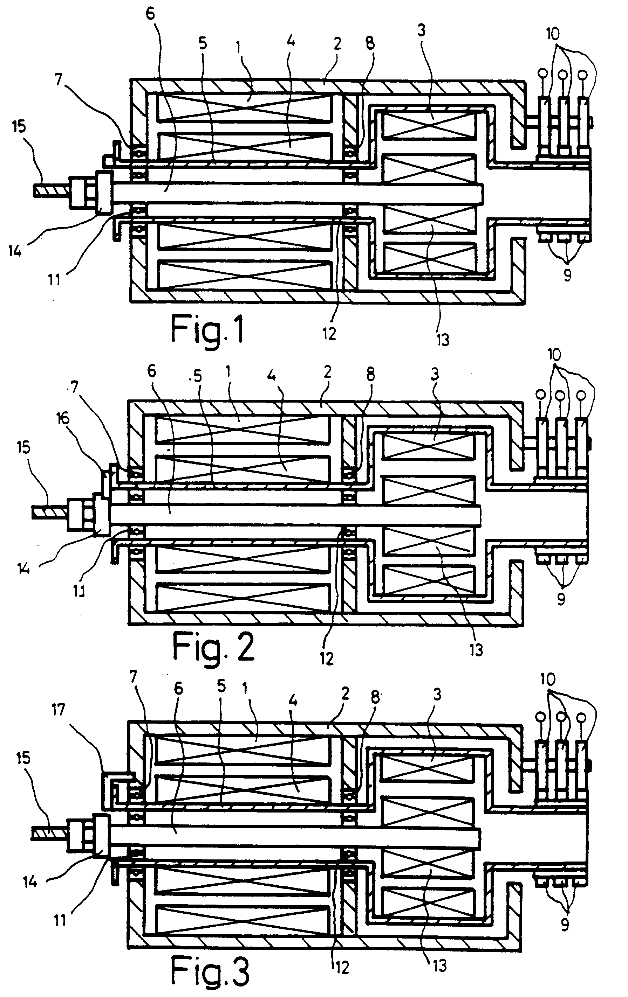

In den Figuren 1, 2 und 3 ist ein Hauptspindelantrieb schematisch dargestellt.

Dieser mit mehreren einstellbaren Drehzahlen arbeitende Hauptspindelantrieb kann für verschiedene Werkzeugmaschinen mit einem eine Drehbewegung ausführenden Werkzeug, z.B. für Fräs-, Bohr- oder Drehmaschienen verwendet werden. Der Hauptspindelantrieb besteht aus zwei gleichachsig hintereinander angeordneten Elektromotoren für Wechselstrom. Im Bedarfsfall können auch Gleichstrommotoren verwendet werden. Nur der Stator 1 des am vorderen Ende der Reihe der Elektromotoren liegenden Elektromotors ist ortsfest, in einem Gehäuse 2 befestigt. Der Stator 3 des anderen Elektromotors ist im gleichen Gehäuse 2 drehbar gelagert. Der Rotor 4 des am vorderen Ende der Reihe der Elektromotoren liegenden Elektromotors ist mit dem drehbar gelagerten Stator 3 des nächstfolgenden Elektromotors mechanisch starr gekuppelt. Der Hauptspindelantrieb ist mit zwei koaxial geführten Wellen 5, 6 ausgerüstet. Der Rotor 4 des vorderen Elektromotors ist an der äusseren, rohrförmigen Welle 5 befestigt. Die rohrförmige Welle 5 ist mittels Lager 7, 8 im ortsfesten Gehäuse 2 gelagert. Der Stator 3 des nächstfolgenden Elektromotors ist über einen erweiterten Teil an dieser rohrförmigen Welle 5 angekuppelt. Der Stator 3 des zweiten Elektromotors wird über Schleifringe 9 und ortsfeste Bürsten 10 mit Wechselstrom versorgt. Die innere Welle 6 ist in der äusseren, rohrförmigen Welle 5 mittels Lager 11, 12 gelagert und trägt den Rotor 13 des zweiten Elektromotors. Der Werkzeughalter 14 für einen Fräser 15 ist an der inneren Welle 6 angeschlossen.

In den Figuren 1 bis 3 weist der vordere Elektromotor eine durch ein nicht dargestelltes mit einer bekannten Phasenanschnittsteuerung ausgerüstetes Vorschaltgerät von 0 bis 6000 Umdrehungen in der Minute kontinuierlich veränderbare Drehzahl auf. Der Elektromotor ist für beide Drehrichtungen umschaltbar und hat eine Leistung von 5kW. Die Drehzahl des zweiten Elektromotors ist ebenfalls durch ein nicht dargestelltes elektrisches Vorschaltgerät mit Phasenanschnittsteuerung kontinuierlich zwischen 0 und 8000 Umdrehungen in der Minute einstellbar. Dieser Elektromotor ist auch in beiden Drehrichtungen betreibbar und hat eine Leistung von 4kW.

In der Anordnung nach Fig.1 werden die beiden Elektromotoren mit der gleichen Drehrichtung eingeschaltet. Der mit der inneren Welle 6 gekuppelte Werkzeughalter 14 dreht sich dabei mit einer der Summe der Drehzahlen beider Elektromotoren entsprechenden Drehzahl, die bis 14000 Umdrehungen in der Minute steigerbar ist. Mit dieser Drehzahl werden vorallem kleinere Fräser betrieben. Es ist natürlich auch möglich, die beiden Elektromotoren in entgegengesetzter Drehrichtung drehen zu lassen. In diesem Fall wird sich der Werkzeughalter 14 mit einer der Differenz der beiden Motorendrehzahlen entsprechenden Drehzahl drehen. Die Lager 7, 8 des vorderen Elektromotors drehen sich in dieser Anordnung nur mit der Drehzahl dieses Motors und die Lager 11, 12 des zweiten Elektromotors nur mit der Drehzahl des zweiten Motors. Kein einziges Lager muss sich mit der Drehzahl des Werkzeughalters 14 drehen. Aus diesem Grunde können verhältnismässig einfache und kostengünstige Lager verwendet werden.

In der Anordnung nach Fig.2 sind die äussere Welle 5 und die innere Welle 6 durch ein Verbindungsstück 16 miteinander mechanisch gekuppelt. Der zweite Elektromotor ist dabei vom elektrischen Netz abgetrennt und ist mechanisch kurzgeschlossen, weil der Stator 3 und der Rotor 13 miteinander gekuppelt sind. Der jetzt mit den beiden Wellen 5, 6 gekuppelte Werkzeughalter 14 dreht sich mit der am vorderen Elektromotor eingestellten Drehzahl, der Stator 3 und der Rotor 13 des zweiten Elektromotors drehen sich passiv mit. Diese Anordnung ist zum Antreiben relativ grosser Werkzeuge, z.B. Fräser 15 geeignet.

In der Anordnung nach Fig.3 ist die äussere Welle 5 durch ein Verbindungsstück 17 mit dem ortsfesten Gehäuse 2 mechanisch gekuppelt. Der vordere Elektromotor ist hier vom Netz getrennt. Nur der zweite, über die jetzt stillstehender Schleifringe 9 gespeiste Elektromotor treibt den Werkzeughalten 14 an. Die Schleifringe 9 sind über feste, nicht dargestellte Greifbacken mit einer Stromversorgungseinheit verbunden. Diese Anordnung ist zum Antreiben von kleineren Werkzeugen mit bis zu 8000 Umdrehungen in der Minute geeignet. Im Bedarfsfall können aber dafür auch mehrere, hintereinander geschaltete, als Hochfrequenzmotor ausgebildete Elektromotoren mit beliebeig hohen Drehzahlen eingesetzt werden.

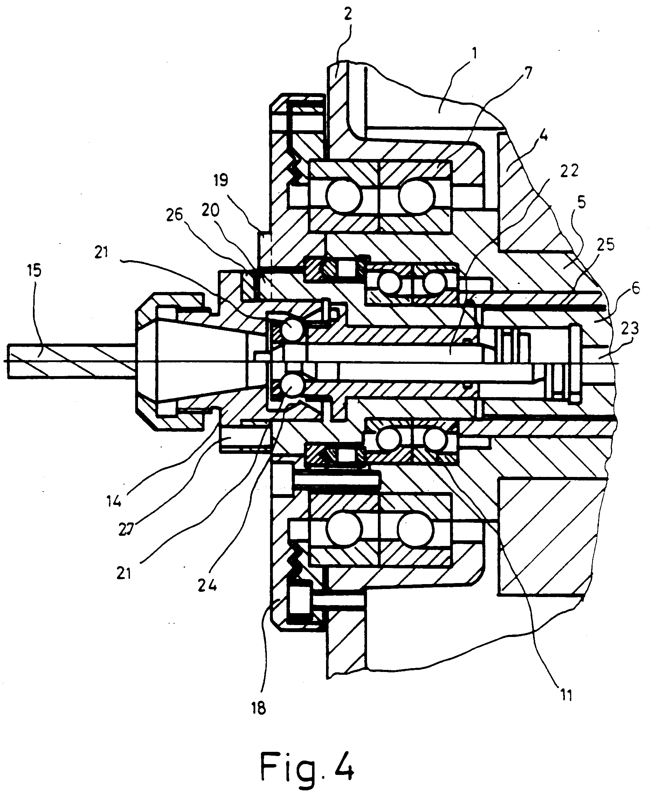

Fig.4 zeigt eine Schnittzeichnung des dem Werkzeughalter 14 zugekehrten Endbereiches eines Hauptspindelantriebes. Diese Zeichnung zeigt diesen Endbereich in der in Fig.1 dargestellten Betriebsart, d.h. die Rotoren 4 und 13 der beiden Elektromotoren sind an den voneinander unabhängig drehbaren Wellen 5 und 6 angeschlossen. Die innere Welle 6 dreht sich je nach der relativen Drehrichtung der Drehfelder in den beiden Elektromotoren mit der Summe oder mit der Differenz der Drehzahlen der beiden Elektromotoren.

Die folgende Beschreibung gilt für die identischen Teile des in den Figuren 4, 5 und 6 dargestellten Ausschnittes eines Hauptspindelantriebes. Die Bezugsziffer der Teile in diesen Figuren stimmen mit den in den Figuren 1, 2 und 3 für die gleichen Teile verwendeten Bezugsziffern überein. Die in den Figuren 4, 5 und 6 nicht übereinstimmenden Teile und ihre Funktionsweise werden weiter unten beschrieben. Am Gehäuse 2 ist der Stator 1 des vorderen Elektromotors befestigt. Das Lager 7 liegt zwischen dem Gehäuse 2 und dem äusseren, rohrförmigen Welle 5. Am dem vorderen Ende der Reihe der Elektromotoren zugekehrten Ende der Welle 5 ist eine Scheibe 18 befestigt. An dieser Scheibe sind mehrere am Umfang gleichmässig verteilte Nocken 19 angeformt, die als mechanische Anschlusstelle für die Welle 5 dienen. In der rohrförmigen Welle 5 ist die innere Welle 6 mit dem Lager 11 drehbar gelagert. Die innere Welle 6 ist an ihrem dem vorderen Ende der Reihe der Elektromotoren zugekehrten Ende auch mit mehreren am Umfang mit der Verteilung der Nocken 19 übereinstimmend verteilten Nocken 20 versehen. Der Werkzeughalter 14 wird in der inneren Welle 6 mit Hilfe einer Kugelsperre in axialer Richtung gehalten. Die Kugelsperre besteht aus mehreren am Umfang verteilten Kugeln 21, die mit der konischen Ende eines Druckluftkolbens 22 zusammenwirken. Durch Einführen von Druckluft in die Bohrung 23 wird der Druckluftkolben 22 in die in der oberen Hälfte der Figuren 4, 5 und 6 dargestellte Stellung nach vorne geschoben. Die Kugeln 21 werden durch das konische Ende des Druckluftkolbens 22 axial herausgeschoben und halten den Werkzeughalter 14 an der Schrägfläche 24 in axialer Richtung fest. Die für die Uebertragung einer Drehbewegung auf den Werkzeughalter 14 erforderlichen Mitnehmer werden für die Figuren 4, 5 und 6 weiter unten einzeln beschrieben. Der Druckluftkolben 22 kann durch Einführen von Druckluft in den Kanal 25 zurückgezogen werden, wobei die Kugeln 21, wie in der unteren Hälfte der Figuren 4, 5 und 6 dargestellt ist, axial nach innen geschoben werden können. In dieser Stellung des Druckluftkolbens 22 ist der Werkzeughalter 14 an der Schrägfläche 24 nicht mehr gehalten und kann aus der inneren Welle 6 herausgezogen weren.

In der in Fig.4 dargestellten Anordnung gehört zum Werzeughalter 14 eine Kupplungsscheibe 26, die einerseits mittels Bolzen 27 mit dem Hauptkörper des Werkzeughalters 14 drehfest gekoppelt ist und anderseits durch am Umfang verteilte radiale Nuten die Nocken 20 der inneren Welle 6 aufnimmt. Auf dieser Weise ist der Werkzeughalter 14 und das darin gehaltene Werkzeug, z.B. Fräser 15 mit der inneren Welle 6 drehfest gekuppelt.

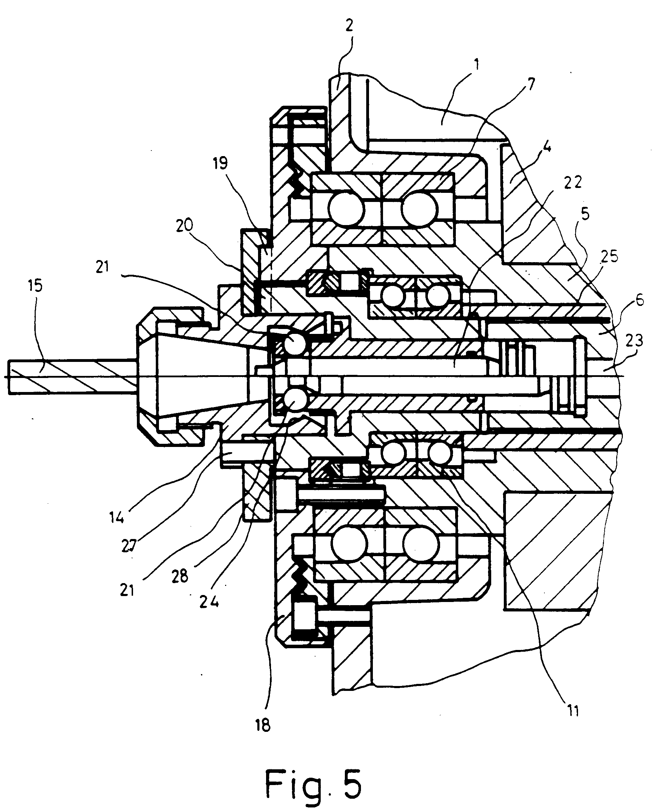

Bei der in der Fig.5 dargestellten Anordnung gehört zum Werkzeugträger 14 eine andere Kupplungsscheibe 28. Diese Kupplungsscheibe 28 ist einerseits über die Bolzen 27 mit dem Hauptkörper des Werkzeugträgers 14 und anderseits über die in die am Umfang der Kupplungsscheibe 28 verteilten radialen Nuten hineinpassenden Nocken 19 und 20 sowohl mit der inneren Welle 6 als auch mit der äusseren, rohrförmigen Welle 5 gekuppelt. Durch die Kupplungsscheibe 28 des Werkzeughalters 14 ist der zweite Elektromotor mechanisch kurzgeschlossen. wie es in Fig.2 schematisch dargestellt war.

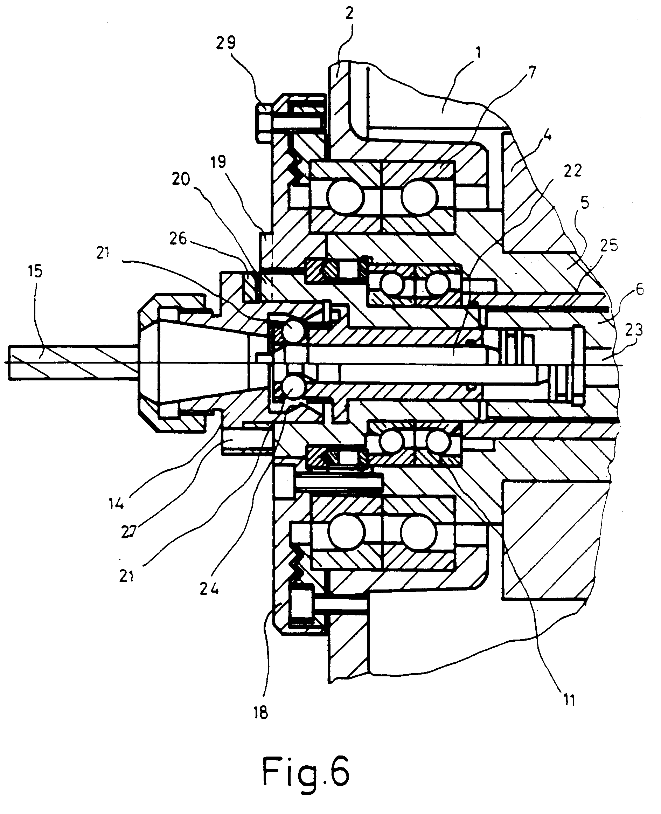

Bei der in Fig.6 gezeigten Anordnung erfolgt die Ankupplung des Werkzeughalters 14 genau gleich, wie bei der in Fig.4 dargestellten Anordnung. Der vordere Elektromotor des in Fig.6 ersichtlichen Anordnung ist aber mittels der Schraube 29 mechanisch kurzgeschlossen, wie es bereits anhand der Fig.3 besprochen wurde. Die Schraube 29 verbindet die mit der äusseren rohrförmigen Welle 5 verbundene Scheibe 18 mit dem am Gehäuse 2 befestigten, ortsfesten Lagerhaltering.

## Patentansprüche

1. Hauptspindelantrieb für eine Werkzeugmaschine mit mehreren einstellbaren Drehzahlen mit mindestens zwei gleichachsig hintereinander angeordneten Elektromotoren, wobei der Stator(1) nur eines einzigen, an einem Ende der Reihe der Elektromotoren liegenden Elektromotors ortsfest befestigt ist und die Statoren der übrigen Elektromotoren drehbar gelagert sind, wobei der Rotor des einen Elektromotores mit dem drehbar gelagerten Stator des nächstfolgenden Elektromotores mechanisch starr gekuppelt ist, wobei einer der Elektromotoren eine koaxiale Welle mit einer Anschlussstelle für einen Werkzeughalter aufweist, **dadurch gekennzeichnet, dass** der Stator (1) des am vorderen Ende der Reihe der Elektromotoren liegenden Elektromotors ortsfest befestigt ist, und dass der Rotor jedes Elektromotores an einer von mehreren koaxialen Wellen (5, 6) derart angeschlossen ist, dass der am vorderen Ende der Reihe der Elektromotoren liegende Rotor (4) an der äussersten rohrförmigen Welle (5) und die der Reihe nach nachfolgenden Rotoren (13) an einer der Reihe nach weiter innen liegenden koaxialen Welle (6) angeschlossen sind, wobei alle koaxialen Wellen am vorderen Ende der Reihe von Elektromotoren herausgeführt sind und an ihren Enden für die Aufnahme eines Werkzeughalters (14) bestimmte mechanische Anschlussstellen aufweisen.

2. Hauptspindelantrieb nach Anspruch 1, dadurch gekennzeichnet, dass mindestens ein Elektromotor in zwei Drehrichtungen betreibbar ist.

3. Hauptspindelantrieb nach Anspruch 1, dadurch gekennzeichnet, dass mindestens einer der Elektromotoren mit kontinuierlich veränderbaren Drehzahlen betreibbar ist.

4. Hauptspindelantrieb nach einem der Ansprüche 1 bis 3, dadurch gekennzeichnet, dass der Werkzeughalter an jede der koaxialen Wellen anschliessbar ist.

5. Hauptspindelantrieb nach einem der Ansprüche 1 bis 3, dadurch gekennzeichnet, dass der Stator (1) mit dem Rotor (4) mindestens einer der Elektromotoren mechanisch kuppelbar ist.

6. Hauptspindelantrieb nach Anspruch 5, dadurch gekennzeichnet, dass der Werkzeughalter (14) die mechanische Kupplung des Stators (1) mit dem Rotor (4) des Elektromotores bildet.

7. Hauptspindelantrieb nach Anspruch 6, dadurch gekennzeichnet, dass dass der Werkzeughalter (14) an der innersten koaxialen Welle (6) ankuppelbar ist.

## Claims

1. A main spindle drive for a machine tool with several adjustable speeds, having at least two coaxially, successively arranged electric motors, the stator (1) of one electric motor positioned at one end of the row of electric motors being fixed and the stators of the remaining electric motors being mounted in rotary manner, wherein the rotor of one electric motor is mechanically rigidly coupled to the rotatably mounted stator of the next following electric motor, one of the electric motors having a coaxial shaft with a connection point for a tool holder, characterised in that the stator (1) of the electric motor located at the front end of the row of electric motors is fixed and that the rotor of each electric motor is so connected to one of several coaxial shafts (5, 6) that the rotor (4) at the front end of the row of electric motors is connected to the outermost tubular shaft (5) and the successively following rotors (13) are connected to one of the successively further inwardly located coaxial shafts (6), all the coaxial shafts being passed out at the front end of the row of electric motors and have at their ends specific mechanical connection points for the reception of a tool holder (14).

2. A main spindle drive according to claim 1, characterised in that at least one electric motor is operable in two rotation directions.

3. A main spindle drive according to claim 1, characterised in that at least one of the electric motors is operable with continuously variable speeds.

4. A main spindle drive according to one of claims 1 to 3, characterised in that the tool holder is connectable to each of the coaxial shafts.

5. A main spindle drive according to one of claims 1 to 3, characterised in that the stator (1) is capable of mechanically coupling to the rotor (4) of at least one of the electric motors.

6. A main spindle drive according to claim 5, characterised in that the tool holder (14) forms the mechanical coupling of the stator (1) with the rotor (4) of the electric motor.

7. A main spindle drive according to claim 6, characterised in that the tool holder (14) can be coupled to the innermost coaxial shaft (6).

## Revendications

1. Entraînement de la broche principale d'une machine-outil ayant plusieurs vitesses de rotation ajustables avec au moins deux moteurs électriques disposés l'un derrière l'autre dans un même axe, dans lequel le stator (1) seulement d'un moteur électrique se trouvant à une extrémité de la série des moteurs électriques est assujetti fixement et les stators des autres moteurs électriques sont mobiles autour d'un axe, tandis que le rotor de l'un des moteurs est couplé par une liaison mécanique rigide avec le stator mobile autour d'un axe du moteur électrique immédiatement suivant, l'un des moteurs électriques présentant une broche coaxiale avec un point de couplage pour un porte-outil, caractérisé en ce que le stator (1) du moteur électrique se trouvant à l'extrémité avant de la série des moteurs électriques est assujetti fixement, et que le rotor de chaque moteur électrique est raccordé à l'une des broches coaxiales (5,6) de telle sorte que le rotor (4) se trouvant à l'extrémité avant de la série des moteurs électriques soit raccordé à la broche tubulaire la plus extérieure (5) et que les rotors suivants de la série (13) soient raccordés à l'une des broches (6) coaxiales de la série se trouvant plus à l'intérieur, tandis que toutes les broches coaxiales sortent à l'extrémité avant de la série des moteurs électriques et présentent à leurs extrémités des points de couplage mécanique déterminés pour la fixation d'un porte-outil (14).

2. Entraînement de broche principale selon la revendication 1, caractérisé en ce qu'au moins un moteur électrique peut être mis en fonctionnement dans deux sens de rotation.

3. Entraînement de broche principale selon la revendication 1, caractérisé en ce qu'au moins l'un des moteurs électriques peut être mis en fonctionnement avec des vitesses de rotation variables en continu.

4. Entraînement de broche principale selon l'une quelconque des revendications 1 à 3, caractérisé en ce que le porte-outil peut être raccordé à chacune des broches coaxiales.

5. Entraînement de broche principale selon l'une quelconque des revendications 1 à 3, caractérisé en ce que le stator (1) peut être couplé mécaniquement avec le rotor (4) d'au moins un des moteurs électriques.

6. Entraînement de broche principale selon la revendication 5, caractérisé en ce que le porte-outil (14) forme le couplage mécanique du stator (1) avec le rotor (4) du moteur électrique.

7. Entraînement de broche principale selon la revendication 6, caractérisé en ce que le porte-outil (14) peut être couplé à la broche coaxiale la plus intérieure (6).
